(19) Europäisches Patentamt
European Patent Office
Office européen des brevets

(11) **EP 2 231 448 B1**

(12) **EUROPÄISCHE PATENTSCHRIFT**

(45) Veröffentlichungstag und Bekanntmachung des Hinweises auf die Patenterteilung:
**25.06.2014 Patentblatt 2014/26**

(21) Anmeldenummer: **08860213.1**

(22) Anmeldetag: **05.12.2008**

(51) Int Cl.:
***B60T 8/17*** *(2006.01)*   ***B60T 8/172*** *(2006.01)*
***B60T 8/175*** *(2006.01)*

(86) Internationale Anmeldenummer:
**PCT/EP2008/010316**

(87) Internationale Veröffentlichungsnummer:
**WO 2009/074265 (18.06.2009 Gazette 2009/25)**

(54) **VERFAHREN ZUR REGELEINRICHTUNG ZUR ANTRIEBS- UND BREMSKRAFTKONTROLLE EINES FAHRZEUGS SOWIE EIN FAHRZEUG MIT DER REGELEINRICHTUNG**

METHOD FOR A REGULATING DEVICE FOR CONTROLLING THE DRIVING AND BRAKING FORCE OF A VEHICLE, AND A VEHICLE HAVING SAID REGULATING DEVICE

PROCÉDÉ ET DISPOSITIF DE RÉGULATION POUR LE CONTRÔLE DE LA FORCE D'ENTRAÎNEMENT ET DE LA FORCE DE FREINAGE D'UN VÉHICULE, ET VÉHICULE ÉQUIPÉ DU DISPOSITIF DE RÉGULATION

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **13.12.2007 DE 102007060032**

(43) Veröffentlichungstag der Anmeldung:
**29.09.2010 Patentblatt 2010/39**

(73) Patentinhaber: **KNORR-BREMSE Systeme für Schienenfahrzeuge GmbH 80809 München (DE)**

(72) Erfinder: **RASEL, Thomas 85635 Höhenkirchen-Siegertsbrunn (DE)**

(74) Vertreter: **Schönmann, Kurt Knorr-Bremse AG Moosacher Strasse 80 80809 München (DE)**

(56) Entgegenhaltungen:
**EP-A- 0 818 372      WO-A-92/00212
FR-A- 2 866 853      US-A1- 2007 194 623**

EP 2 231 448 B1

**Beschreibung**

Die Erfindung betrifft ein Verfahren zur Antriebs- und Bremskraftkontrolle eines Fahrzeugs, das insbesondere ein Schienenfahrzeug ist, eine Regeleinrichtung sowie ein Fahrzeug mit der Regeleinrichtung.

Das erfindungsgemäße Verfahren kann bei einer Vielzahl von Fahrzeugen und insbesondere bei Schienenfahrzeugen mit einer Gleit- und Schleuderschutzeinrichtung eingesetzt werden.

Bei einem Schienenfahrzeug stellt der Kraftschluss zwischen Rad und Schiene ein Maß für die verfügbare Brems- oder Antriebskraft dar und unterliegt verschiedenen Einflussfaktoren, die diesen reduzieren können. Befindet sich der Kraftschluss, beispielsweise aufgrund von Feuchtigkeit auf der Schiene, auf einem niedrigen Niveau können unter Umständen die gewünschten Antriebs- und Bremskräfte nicht vollständig übertragen werden. Ist das Drehmoment des Antriebssystems größer als das bei der betreffenden Raddrehzahl von dem Rad-Schiene-System aufnehmbare Drehmoment kann es zum Schleudern (Durchdrehen) der Räder kommen. Beim Bremsen mit zu hoher Bremskraft kann es umgekehrt zum Gleiten (Rutschen) der Räder kommen, die dann die Bremskraft nicht mehr vollständig auf die Schiene übertragen. Dies kann zu einem erhöhten Verschleiß der Reibpartner, zu Schäden an Antriebssystem und Radsätzen durch eine Überdrehzahl oder auftretende Kraftspitzen und zu verringerten übertragbaren Antriebs- und Bremskräften führen.

Zum Verhindern des Schleuderns und Gleitens der Räder ist beispielsweise aus der DE 199 61 805 A1 eine Gleit- und Schleuderschutzeinrichtung bekannt, die aus den vorhandenen Kraftschlusskennlinien (Haftwert-Schlupf-Kurven) des Rad-Schiene-Systems, in Abhängigkeit der Radumfangsgeschwindigkeit, die vorhandenen Maximalwerte ausnutzt und damit die möglichen Brems- bzw. Antriebskräfte zur Verfügung stellt. Die regelungstechnischen Ziele bestehen bei derartigen Lösungen im Wesentlichen aus der Steuerung der Antriebs- und Bremskraft in Abhängigkeit von Radschlupf und Radbeschleunigung. Hierbei darf ein bestimmter maximaler Schlupf, beispielsweise für das Gleiten aus der UIC-Norm 541-05, nicht überschritten werden.

Die europäische Patentanmeldung EP 0 818 372 A2 beschreibt eine System für die Antriebs- und Bremssteuerung eines Schienenfahrzeuges. Insbesondere wird in diesem System eine Meßgröße zur Erfassung der Radbeanspruchung sowie mindestens ein Grenzwert für die zulässige Radbeanspruchung verwendet. Dabei kann die verwendete Messgröße beispielsweise die Temperatur der Radlauffläche sein.

Aus der FR 2 866 853 A ist eine Vorrichtung und ein Verfahren bekannt, die zur Regelung des Schlupfes dienen. Unter anderem wird dabei die Temperatur eine Kontaktfläche zwischen einem Rad und einem Untergrund versucht in einem optimalen Bereich für ein optimales Reibpotential zu halten.

Die internationale Veröffentlichung mit der Nummer WO 92/00212 A1 beschreibt ein Fahrzeug mit Überwachung der Bremstemperatur. Dabei wird unter anderem die Temperaturerhöhung bei Bremsbetätigung in vorgegebenen Zeitabständen ermittelt und in Bezug zu einer Grenztemperatur der Bremse gesetzt.

In der US Patentanmeldung US 2007/0194623 A1 ist ein Bremsregelverfahren sowie ein Bremsregelapparat beschrieben. Dabei wird die Temperatur eines Reibelements ermittelt und die Genauigkeit dieser Ermittlung vorherbestimmt.

Nachteilig bei derartigen Gleit- und Schleuderschutzeinrichtungen ist, dass die gewünschten Antriebs- und Bremskräfte bei einem niedrigen Niveau des Kraftschlusses nicht vollständig übertragbar sind, so dass es begrenzt durch die Gleit- und Schleuderschutzeinrichtung, zu einem Gleiten bzw. Schleudern der Radsätze kommen kann. Ein Anheben des verfügbaren Kraftschlusses ist bei derartigen Regelungen nicht vorgesehen.

Demgegenüber liegt der Erfindung die Aufgabe zugrunde, ein Verfahren und eine Regeleinrichtung zur Antriebs- und Bremskraftkontrolle für ein Fahrzeug sowie ein Fahrzeug mit einer derartigen Regeleinrichtung zu schaffen, mit dem bzw. mit der ein verbesserter Kraftschluss zwischen den Reibpartnern möglich ist.

Diese Aufgabe wird mit den Merkmalen der unabhängigen Patentansprüche gelöst. Weitere Ausführungsformen sind in den auf diese rückbezogenen Unteransprüchen angegeben.

Die Erfindung findet vorzugsweise bei Schienenfahrzeugen mit eine Lauffläche aufweisenden Schienen Verwendung. Eine erwünschte maximale Temperaturänderung auf der Schiene, um beispielsweise den Kraftschluss zu verbessern, kann direkt vorgegeben oder eingeprägt werden. Die maximale Temperaturänderung kann hierbei auch als zeitlicher Verlauf vorgegeben oder eingeprägt werden.

Das erfindungsgemäße Verfahren bzw. die erfindungsgemäße Vorrichtung zur Antriebs- und Bremskraftkontrolle bezieht sich auf eine Antriebs- und Bremskraftkontrolle bei zumindest zwei Reibpartnern, z.B. ein Rad und eine Lauffläche des Rades, wobei aus mindestens einer vorgegebenen oder ermittelten Temperaturgröße und einem ermittelten Geschwindigkeitswert ein der Antriebs- oder Bremskraft entsprechender Wert zur Regelung oder Steuerung der Antriebs- oder Bremskraft ermittelt wird. Die Temperaturgröße kann ein Wert für eine Temperatur oder ein Wert für eine Temperaturänderung sein.

Bei dem Verfahren kann insbesondere vorgesehen sein, dass eine Reibleistung der Reibpartner derart eingestellt wird, dass eine vorbestimmte Temperaturgröße der Reibpartner zur Beeinflussung des Kraftschlusses (mueRs) erreicht wird.

Dabei kann als Temperaturgröße eine Temperaturerhöhung dTempRadSoll an einem Rad und eine Temperaturerhöhung dTempSchieneSoll an einer Lauffläche verwendet werden, die gemessen, ermittelt oder als Annahmen vorgegeben werden. Weiterhin kann als Temperaturerhöhung am Rad und/oder als Temperaturerhöhung der Lauffläche eine maximal zulässige Temperaturerhöhung verwendet werden. Die Temperaturerhöhungen können phasenweise manuell oder automatisch veränderlich sein.

Bei diesen Varianten basierend auf zumindest einer Temperaturgröße eine auf zumindest einen Reibpartner bezogene Soll-Reibleistung (PReibSollSchiene). Basierend auf den Temperaturen kann dabei vorgesehen sein, dass eine auf das Rad bezogene Soll-Reibleistung (PReibSollRad) und/oder eine auf die Lauffläche bezogene Soll-Reibleistung (PReibSollSchiene) gebildet werden.

Nach der Erfindung wird insbesondere eine erwünschte maximale Temperaturänderung oder eine maximal zulässige Temperaturänderung vorgegeben oder den verwendeten Funktionen eingeprägt werden, um beispielsweise den Kraftschluss zu verbessern. Die maximale Temperaturänderung kann hierbei auch als zeitlicher Verlauf vorgegeben oder eingeprägt werden. In den vorgenannten Fällen kann vorgesehen sein, dass aus zumindest einer Temperaturgröße und zumindest einem Geschwindigkeitswert eine Reibleistung ermittelt werden und insbesondere eine auf den ersten von zwei Reibpartnern bezogene Reibleistung (PReibSollSchiene) aus einer Temperatur dieses Reibpartners und dem Geschwindigkeitswert ermittelt wird.

Dabei kann die dazu notwendige bzw. zulässige Reibleistung zwischen den Reibpartnern ermittelt oder vorgegeben werden. Bei der Verwendung von maximal auftretenden Temperaturänderungen bei den Reibpartnern und insbesondere am Rad und auf oder an der Schiene können diese insbesondere aus der Reibleistung, den Geometriedaten der Rad-Schiene-Kontaktfläche, Materialkonstanten und der Kontaktzeit, für die sich ein, quer zur Fahrtrichtung gedachter Linienpunkt auf der Lauffläche des Rades bzw. der Schiene, innerhalb des Feldes mit einer Leistungsdichte (Reibleistung/Kontaktfläche) befindet, abgeschätzt werden. Die maximale Temperaturänderung ist erreicht, wenn der Linienpunkt das Kontaktgebiet mit der Leistungsdichte verlässt, also am Ende der Kontaktzeit. Bei dem Verfahren kann vorgesehen sein, dass die Abhängigkeiten der Antriebs- oder Bremskraft von der Fahrzeuggeschwindigkeit, der Radgeschwindigkeit und/oder der Reibkraft funktional berücksichtigt werden. Mittels einem zu dem oben beschriebenen Rechengang inversen Rechengang kann aus der zulässigen oder geforderten maximalen Temperaturerhöhung am Rad bzw. auf der Schiene die notwendige bzw. zulässige Reibleistung bestimmt werden. Bei dem Verfahren kann die sich beim Gleiten bzw. Schleudern der Reibpartner einstellende Reibgeschwindigkeit (Differenz zwischen Radumfangsgeschwindigkeit und Fahrzeuggeschwindigkeit) in Verbindung mit der vorhandenen Reibkraft (Produkt aus Radaufstandskraft und Kraftschluss) und daraus die Reibleistung im Rad-Lauffläche-Kontaktbereich und damit die Temperaturerhöhung bei den Reibpartnern Rad und Lauffläche ermittelt werden. Bei einer entsprechenden Änderung der Brems- oder Antriebskraft wird aufgrund der Reibleistung und der damit verbundenen Temperaturerhöhung der zur Verfügung stehende Kraftschluss zwischen den Reibpartnern erhöht.

Die erfindungsgemäße Lösung erlaubt es daher, die in den Rad-Lauffläche-Kontaktbereich eingebrachte Reibleistung und die damit verbundene Temperaturerhöhung an Rad bzw. Schiene so zu gestalten, dass zur Umsetzung der angeforderten Brems- und Antriebskräfte eine Optimierung des Kraftschlusses ermöglicht wird. Bei der erfindungsgemäßen Lösung werden vorzugsweise die Materialgrenzen von Rad und Schiene hinsichtlich der sich einstellenden Temperaturerhöhungen im Reibgebiet beachtet, so dass eine Beschädigung der Reibpartner verhindert wird. Die Berechnung bzw. Bewertung der Temperaturerhöhungen im Reibgebiet erfolgen für Rad und Schiene vorzugsweise separat, wie im Folgenden näher erläutert wird.

Die tatsächlichen auftretenden Temperaturänderungen bilden sich, je nachdem ob es sich um Gleiten oder Schleudern des Radsatzes handelt, unterschiedlich aus. Im Zustand Gleiten wird die zulässige Reibleistung, gleiche Temperaturvorgaben für Rad und Schiene vorausgesetzt, vom Rad dominiert, da die Radumfangsgeschwindigkeit kleiner ist als die Fahrzeuggeschwindigkeit. Im Zustand Schleudern liegen umgekehrte Verhältnisse vor.

Gemäß einem besonders bevorzugten Ausführungsbeispiel der Erfindung wird eine Temperaturerhöhung dTempRadSoll am Rad und eine Temperaturerhöhung dTempSchieneSoll der Lauffläche jeweils derart gewählt, dass diese der maximal zulässigen Temperaturerhöhung am Rad oder der Lauffläche entspricht.

Die zulässigen, zeitabhängigen oder nicht zeitabhängigen Temperaturerhöhungen dTempRadSoll, dTempSchieneSoll an Rad und Lauffläche werden vorzugsweise vorgegeben. Die maximal zulässigen Temperaturerhöhungen können, beispielsweise in einer Gefahrensituation, insbesondere bei einer Not- oder Schnellbremsung, phasenweise manuell oder automatisch, z.B. aufgrund von Vorgabewerten, die vom Fahrzeugsystems aufgrund von Parametern zur Beschreibung der Situation vorliegen, erhöht werden.

Basierend auf den zulässigen Temperaturerhöhungen dTempRadSoll, dTempSchieneSoll wird bei einem bevorzugten Ausführungsbeispiel der Erfindung eine auf das Rad bezogene Soll-Reibleistung PReibSollRad und eine auf die Lauffläche bezogene Soll-Reibleistung PReibSollSchiene gebildet. Das heißt, die Berechnung der zulässigen Reibleistungen der Reibpartner erfolgt aufgrund der jeweils maximal zulässigen Temperaturerhöhung der Reibpartner. Die Reibleistung wird im Zustand Gleiten, durch die zulässige maximale Temperaturerhöhung am Rad begrenzt. Das Rad wird vor Schäden bewahrt. Die Abhängigkeiten von der Radgeschwindigkeit und der Reibkraft werden entsprechend berücksichtigt.

Die Reibleistung PReibSollRad wird vorzugsweise aus dem Produkt der Temperatur dTempRadSoll und dem Geschwindigkeitswert ermittelt.

Zusätzlich oder alternativ kann die Reibleistung PReibSollSchiene aus dem Produkt der Temperatur dTemp-SchieneSoll und dem Geschwindigkeitswert ermittelt werden.

Aus der vorgegebenen maximalen Temperaturerhöhung und der Kontaktzeit kann die zur maximalen Temperaturerhöhung zugehörige Reibleistung bestimmt werden. Es liegt dann eine Reibleistung bezogen auf das Rad und eine Reibleistung bezogen auf die Schiene vor. Die zustandsabhängige Auswahl aus den beiden Reibleistungen liefert die zu realisierende Reibleistung zurück. Die auf die Lauffläche bezogene Reibleistung PReibSollSchiene wird vorzugsweise gemäß der Beziehung

$$PReibSollSchiene = dTempSchieneSoll \cdot VFzg \cdot \frac{1}{k\_T} \cdot \frac{Akontakt}{lkontakt} \quad (f1)$$

gebildet, mit

$$dTempSchieneSoll = \frac{k\_T \cdot Preib}{Akontakt \cdot tkontaktFzg} \quad (1)$$

wobei k_T ein Proportionalitätsfaktor, PReib die Reibleistung gemäß der Gleichung

$$Preib = Vreib \cdot Freib$$

mit der Reibgeschwindigkeit Vreib und Reibkraft Freib, Akontakt die Fläche des Rad-Lauffläche-Kontaktgebietes und tkontaktFzg die Kontaktzeit gemäß der Gleichung

$$tkontaktFzg = \frac{lkontakt}{VFzg}, \quad (2)$$

lkontakt die Länge des Rad-Lauffläche-Kontaktgebietes in Fahrtrichtung und VFzg die Fahrzeuggeschwindigkeit ist.

Entsprechend wird die auf das Rad bezogene Reibleistung PReibSollRad vorzugsweise gemäß der Beziehung

$$PReibSollRad = dTempRadSoll \cdot VRad \cdot \frac{1}{k\_T} \cdot \frac{Akontakt}{lkontakt} \quad (f2)$$

gebildet, mit

$$dTempRadSoll = \frac{k\_T \cdot Preib}{Akontakt \cdot tkontaktRad}, \quad (1)$$

wobei: k_T ein Proportionalitätsfaktor, PReib die Reibleistung gemäß der Gleichung Pr*eib = Vreib·Freib* mit der Reibgeschwindigkeit Vreib und Reibkraft Freib, Akontakt die Fläche des Rad-Lauffläche-Kontaktgebietes, tkontaktRad die

Kontaktzeit gemäß $tkontaktRad = \dfrac{lkontakt}{VRad}$ , lkontakt die Länge des Rad-Lauffläche-Kontaktgebietes in Fahrtrichtung und VRad die Radumfangsgeschwindigkeit ist.

Bei einer bevorzugten Ausführung der Erfindung wird aus der auf das Rad bezogenen Soll-Reibleistung PReib-SollRad und der auf die Lauffläche bezogenen Soll-Reibleistung PReibSollSchiene mittels der Minimalwertbestimmung *P ReibSoll* = min(*P ReibSollSchiene*,Pr *eibSollRad*) (f3) eine Soll-Reibleistung PReibSoll ermittelt. Das heißt, es erfolgt eine Auswahl der kleineren Reibleistung der Reibpartner, so dass keine der beiden Temperaturvorgaben überschritten wird.

Unter Berücksichtigung der momentanen Reibkraft Freib kann die zur Erzeugung der Reibleistung PReibSoll notwendige Reibgeschwindigkeit Vreib und damit der Soll-Radschlupf sSoll bestimmt werden.

Erfindungsgemäß wird es bevorzugt, wenn der Soll-Radschlupf sSoll basierend auf der Soll-Reibleistung PReib-

Soll und dem Kraftschluss mueRs gemäß der Beziehung $sSoll = \dfrac{PreibSoll}{M \cdot g \cdot mueRs \cdot \max(VRad, VFzg)}$ (f5) gebildet wird, wobei M die Achslast des Fahrzeugs, g die Erdbeschleunigung, VRad die Radumfangsgeschwindigkeit und VFzg die Fahrzeuggeschwindigkeit ist.

Die rechnerische Lösung wird aus den folgenden Gleichungen abgeleitet

$$(1) \quad Pr\,eib = Vreib \cdot Freib$$

$$(2) \quad Vreib = VRad - VFzg$$

$$(3) \quad Freib = M \cdot g \cdot mueRs$$

$$(4) \quad sSoll = \frac{VRadSoll - VFzg}{\max(VRad, VFzg)}$$

wobei aus Gleichung (1), Gleichung (2) und Gleichung (3) die Reibleistung Pr *eib*=(*VRad - VFzg*)·*M·g·mueRs* und die

Radumfangsgeschwindigkeit $VRad = \dfrac{Pr\,eib}{(M \cdot g \cdot mueRs)} + VFzg$ sowie die Sollradumfangsgeschwindigkeit

$VRadSoll = \dfrac{Pr\,eibSoll}{(M \cdot g \cdot mueRs)} + VFzg$ ermittelt und in Gleichung (4) eingesetzt wird, um sSoll aus der Soll-

Reibleistung und dem Kraftschluss zu ermitteln.

Der Unterschied zwischen dem Soll-Schlupf sSoll und einem Ist-Schlupf s gemäß

$s = \dfrac{(VRad - VFzg)}{\max(VRad, VFzg)}$ (f4) wird vorzugsweise mittels einem Vergleicherglied ermittelt. Anschließend kann die zum Angleichen des Istschlupfes s an den Soll-Schlupf sSoll erforderliche Radbeschleunigung oder Radverzögerung aRadSoll berechnet werden.

Bei einem besonders bevorzugten Ausführungsbeispiel der Erfindung wird die zum Erreichen der erforderlichen Radbeschleunigung oder Radverzögerung aRadSoll erforderliche Soll-Kraft FSoll unter Berücksichtigung von mueRs* ermittelt. Somit kann der Soll-Radschlupf sSoll durch Anpassung einer Soll-Brems- und/oder Antriebskraft FSoll erreicht werden. Der geforderte Radschlupf wird beispielsweise durch die Anpassung der Bremskraft realisiert. Hierzu erfolgt eine Berechnung der für den geforderten Sollschlupf sSoll notwendigen Antriebs- oder Bremskraft FSoll.

Der Kraftschluss mueRs* wird vorzugsweise gemäß der Beziehung $mueRs* = \dfrac{F* - aRad* \cdot m\_r}{M \cdot g}$ (f8)

gebildet, wobei F* die eingeprägte Brems- und/oder Antriebskraft, aRad die Radbeschleunigung oder Radverzögerung, m_r die rotatorische Radmasse, M die Achslast des Fahrzeugs und g die Erdbeschleunigung ist.

Die auf der Soll-Radbeschleunigung oder Radverzögerung aRadSoll basierende Brems- oder Antriebskraft FSoll wird vorteilhafterweise gemäß der Beziehung *FSoll = aRadSoll·m_r + M·g·mueRs** (f7) gebildet, wobei: m_r die rotatorische Radmasse, M die Achslast des Fahrzeugs, g die Erdbeschleunigung und mueRs* der berechnete Kraftschluss ist.

Vorzugsweise wird eine Kraftvorgabe F des Fahrzeugführers für die Brems- oder Antriebskraft auf die zulässige maximale Kraft FSoll begrenzt. Die resultierende eingeprägte Kraft F* kann gemäß der Minimalauswahl-Beziehung *F* = min(FSoll, F)* (f9) ermittelt werden.

Die erfindungsgemäße Regeleinrichtung, insbesondere für eine Gleit- und Schleuderschutzeinrichtung, weist eine Regelfunktion auf, dadurch gekennzeichnet, dass mittels der Regelfunktion aus zumindest einem vorgegebenen oder ermittelten Temperaturwert dTempSoll und einem ermittelten Geschwindigkeitswert ein der Antriebs- oder Bremskraft FSoll entsprechender Wert zur Regelung oder Steuerung der Antriebs- oder Bremskraft ermittelt wird.

Das erfindungsgemäße Fahrzeug, insbesondere ein Schienenfahrzeug, verwendet zumindest eine Regeleinrichtung zur Antriebs- und Bremskraftkontrolle von zumindest zwei Reibpartnern, insbesondere einem Rad und einer Lauffläche, dadurch gekennzeichnet, dass eine Reibleistung der Reibpartner derart eingestellt ist, dass zumindest ein Temperaturwert dTempSoll der Reibpartner zur Veränderung des Kraftschlusses mueRs erreicht wird.

Sonstige vorteilhafte Weiterbildungen der Erfindung sind Gegenstand weiterer Unteransprüche.

Im Folgenden wird ein bevorzugtes Ausführungsbeispiel der Erfindung anhand schematischer Zeichnungen näher erläutert. Es zeigen:

Figur 1 eine Darstellung eines Rad-Schiene-Systems;

Figur 2 die Temperatur T am Punkt S des Rades in Abhängigkeit der Zeit t anhand einer Kurve;

Figur 3 die Temperatur T am Punkt S* der Schiene in Abhängigkeit der Zeit t anhand einer Kurve und

Figur 4 ein schematisches Blockschaltbild einer erfindungsgemäßen Regeleinrichtung und eines Fahrzeugmodells.

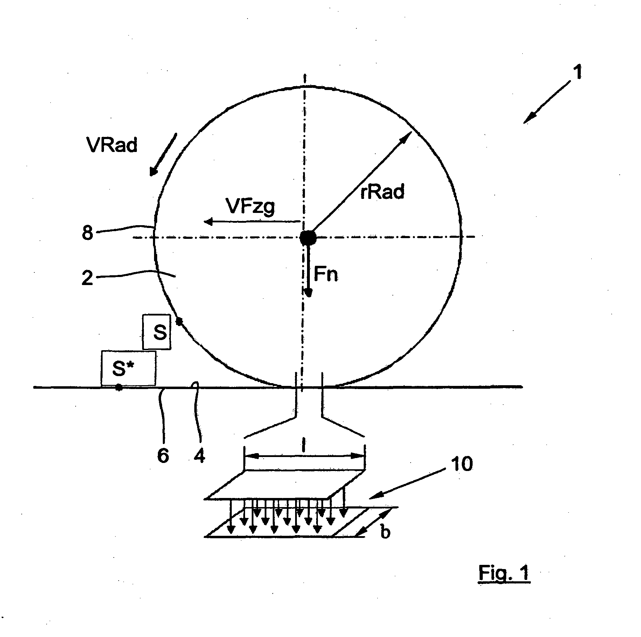

Figur 1 zeigt eine schematische Darstellung eines Rad-Schiene-Systems 1 mit einem Rad 2 eines nicht dargestellten Schienenfahrzeugs, das auf einer eine Lauffläche 4 aufweisenden ortsfesten Schiene 6 geführt ist, dadurch gekennzeichnet, dass sich das Schienenfahrzeug mit einer Geschwindigkeit VFzg entlang der Schiene 6 bewegt. Das Rad 2 mit dem Radius rRad belastet die Schiene 6 mit einer Normalkraft Fn. Die Reibleistung P der Reibpartner Rad 2 und Schiene 6 wird in einem Reibleistungsfeld 10 derart eingestellt, dass eine vorgegebene Temperaturerhöhung dTempSoll der Reibpartner zur Erhöhung des Kraftschlusses mueRs erreicht wird. Mittels der Reibleistung P und der damit verbundenen Temperaturerhöhung wird der zur Übertragung einer Antriebs- oder Bremskraft F zur Verfügung stehende schlupfabhängige Kraftschluss mueRs erhöht. Die erfindungsgemäße Lösung erlaubt es, die in den Rad-Schiene-Kontaktbereich eingebrachte Reibleistung Preib und die damit verbundene Temperaturerhöhung an Rad 2 bzw. Schiene 6 derart zu gestalten, dass zur Umsetzung der angeforderten Brems- und Antriebskräfte eine ausreichende Verbesserung des Kraftschlusses mueRs ermöglicht ist. Hierbei werden die Materialgrenzen von Rad 2 und Schiene 6 hinsichtlich der sich einstellenden Temperaturerhöhungen im Reibgebiet berücksichtigt, so dass eine Beschädigung der Reibpartner verhindert wird. Die Berechnung bzw. Bewertung der Temperaturerhöhungen im Reibgebiet erfolgen für Rad und Schiene separat, wie im Folgenden näher erläutert wird.

Die auftretenden maximalen Temperaturänderungen dTempRadSoll am Rad und dTempSchieneSoll auf der Schiene können aus der Reibleistung P, den Geometriedaten einer Rad-Schiene-Kontaktfläche z, Materialkonstanten und der Kontaktzeit Tein, für die sich ein, quer zur Fahrtrichtung gedachter Linienpunkt S, S* auf einer Außenumfangsfläche 8 des Rades 2 bzw. der Lauffläche der Schiene 4, innerhalb des Reibleistungsfeldes 10 mit der Reibleistungsdichte P_z befindet, abgeschätzt werden. Die Abhängigkeiten von der Fahrzeuggeschwindigkeit VFzg, der Radumfangsgeschwindigkeit VRad und der Reibkraft Fr werden berücksichtigt. Der Linienpunkt S des Rades 2 und der Linienpunkt S* der Schiene 6 bewegen sich im Fall von Gleiten- oder Schleudern mit unterschiedlicher Geschwindigkeit durch das Reibleistungsfeld 10 (Wärmefeld). Beim Zustand des Schleudern bewegt sich der Linienpunkt S des Rades 2 schneller durch das Reibleistungsfeld 10 als der Linienpunkt S* der Schiene 6. Dadurch kann es zu einer Beschädigung der Schiene 6 kommen. Gleiten verursacht demgegenüber, dass sich der Linienpunkt S* der Schiene 6 schneller durch das Reibleistungsfeld 10 bewegt als der Linienpunkt S des Rades 2. Dies kann zu einer Beschädigung des Rades 2 führen.

Das Kontaktfeld 10 weist die Reibleistungsdichte P_z gemäß der Gleichung $P\_z = \dfrac{P}{z}$ auf, dadurch gekennzeichnet, dass die Reibleistung P gemäß der Beziehung $P = (V(Fzg) - V(Rad))·Fr$ und die Kontaktfläche z aus der Kontaktbreite b und der Kontaktlänge 1 gemäß der Formel $z = l·b$ berechnet wird. Die Raddrehzahl n_R wird gemäß $n\_R = \dfrac{V(Fzg)}{U\_R}$ ermittelt, dadurch gekennzeichnet, dass U_R der Radumfang gemäß der Gleichung $U\_R = r(Rad)·2·\pi$ ist.

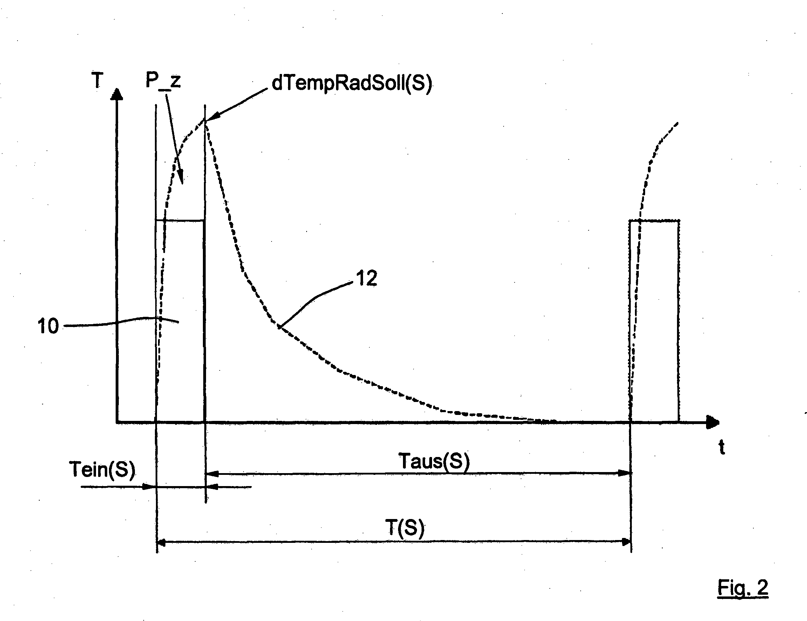

Die maximale Temperaturänderung dTempRadSoll am Rad 2 ist gemäß Figur 2, die anhand einer Kurve 12 den Temperaturverlauf am Punkt S (siehe Figur 1) des Rades 2 in Abhängigkeit der Zeit t zeigt, erreicht, wenn der Linienpunkt S das Reibleistungs-Kontaktgebiet 10 (Reibleistungsfeld) verlässt also am Ende einer Kontaktzeit Tein(S).

Die Kontaktzeit Tein(S) wird gemäß der Beziehung $Tein(S) = T · \dfrac{l}{U\_R}$ oder $Tein(S) = \dfrac{l}{V(Rad)}$ gebildet.

Die Periodendauer T(S) beträgt $T(S) = \dfrac{1}{n\_R}$ und die Pausenzeit $Taus(S) = T·(1 - \dfrac{l}{U\_R})$.

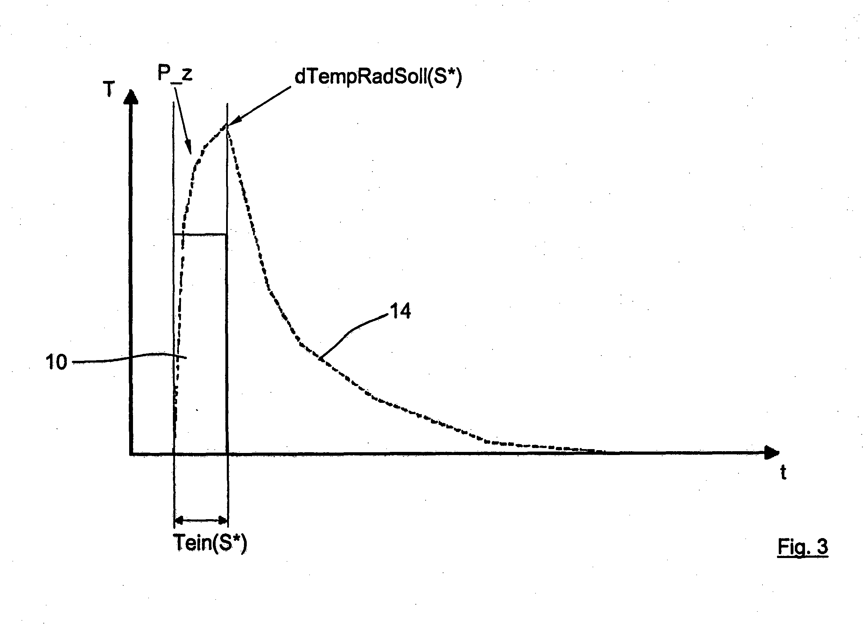

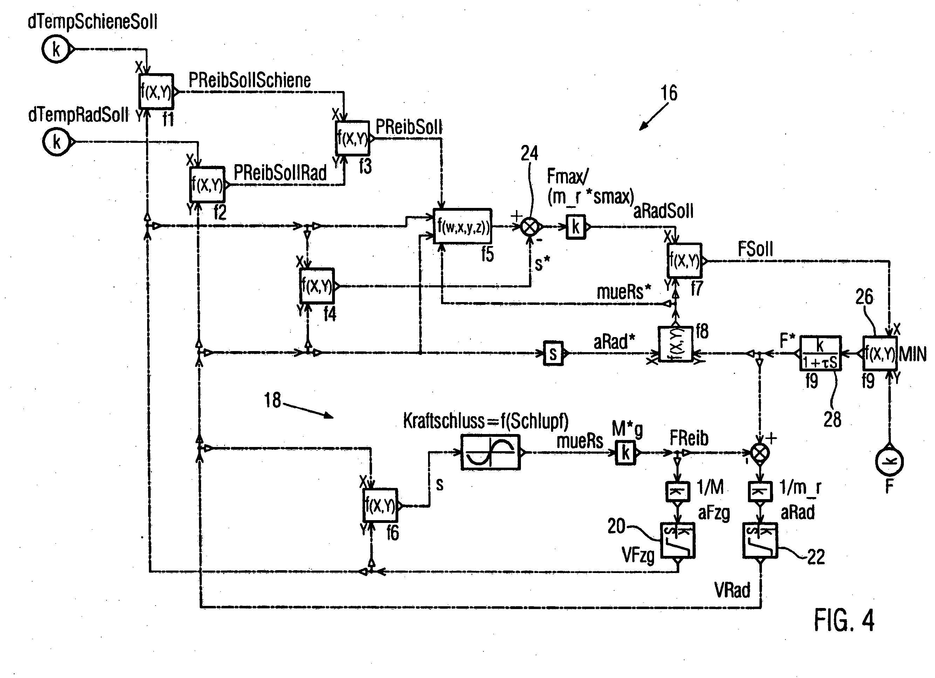

Gemäß Figur 3, die anhand einer Kurve 14 den Temperaturverlauf am Punkt S* der Schiene in Abhängigkeit der Zeit t zeigt, ist die maximale Temperaturänderung dTempSchieneSoll auf der Schiene 6 erreicht, wenn der Linienpunkt S* das Reibleistungs-Kontaktgebiet 10 verlässt also am Ende der Kontaktzeit Tein(S*). Die Kontaktzeit Tein(s*) wird gemäß der Beziehung $Tein(S^*) = \dfrac{l}{V(Fzg)}$ gebildet. Figur 4 zeigt ein schematisches Blockschaltbild einer Regeleinrichtung 16 und einer Fahrzeugmodellierung 18 eines Schienenfahrzeugs. Der Regelalgorithmus für den Gleit- und Schleuderschutz ist um die Führungsgrößen maximale Temperaturerhöhung am Rad dTempRadSoll, maximale Temperaturerhöhung auf der Schiene dTempSchieneSoll und der Reibleistung PReibSoll zwischen Rad 2 und Schiene 6 gegenüber herkömmlichen Gleit- und Schleuderschutzsystemen erweitert. Es erfolgt die Vorgabe einer maximalen Temperaturänderung dTempRadSoll am Rad 2 bzw. Temperaturänderung dTempSchieneSoll der Schiene 6. Bestimmt wird die dazu notwendige bzw. zulässige Reibleistung PReibSollRad bzw. PReibSollSchiene. Die Temperaturerhöhung dTempRadSoll am Rad 2 und die Temperaturerhöhung dTempSchieneSoll der Schiene 6 werden jeweils derart vorgegeben, dass diese der maximal zulässigen Temperaturerhöhung am Rad 2 bzw. der Schiene 6 entsprechen. Die maximale Temperaturänderung dTempRadSoll, dTempSchieneSoll kann hierbei auch als zeitlicher Verlauf eingeprägt werden. Die maximal zulässigen Temperaturerhöhungen dTempRadSoll, dTempSchieneSoll können in einer Gefahrensituation, insbesondere bei einer Not - oder Schnellbremsung des Schienenfahrzeugs, erhöht werden. Das Material der Reibpartner wird hierbei entsprechend höher belastet.

Aus den vorgegebenen maximalen Temperaturerhöhungen dTempRadSoll, dTempSchieneSoll und der Kontaktzeit Tein wird eine auf das Rad 2 bezogene Soll-Reibleistung PReibSollRad und eine auf die Schiene 6 bezogene Soll-Reibleistung PReibSollSchiene gebildet. Das heißt, die Berechnung der zulässigen Reibleistungen der Reibpartner erfolgt aufgrund der jeweils maximal zulässigen Temperaturerhöhung der Reibpartner. Die Temperaturänderungen bilden sich, je nachdem ob es sich um Gleiten oder Schleudern des Radsatzes handelt, unterschiedlich aus. Im Zustand Gleiten wird die zulässige Reibleistung, gleiche Temperaturvorgaben für Rad 2 und Schiene 6 vorausgesetzt, vom Rad 2 dominiert, da die Radumfangsgeschwindigkeit Vrad kleiner ist als die Fahrzeuggeschwindigkeit VFzg. Im Zustand Schleudern liegen umgekehrte Verhältnisse vor. Das heißt, die Reibleistung wird im Zustand Gleiten durch die zulässige maximale Temperaturerhöhung am Rad 2 begrenzt. Das Rad 2 wird dadurch vor Schäden bewahrt. Die Abhängigkeiten von der Radumfangsgeschwindigkeit Vrad und der Reibkraft Freib werden entsprechend berücksichtigt. Die zustandsabhängige Auswahl aus den beiden Reibleistungen PReibSollRad und PReibSollSchiene liefert die zu realisierende Reibleistung PReibSoll zurück. Die auf die Schiene bezogene Reibleistung PReibSollSchiene wird vorzugsweise gemäß der oben angegebenen Gleichung (f1) ermittelt. Entsprechend wird die auf das Rad bezogene Reibleistung PReibSollRad gemäß der Gleichung (f2) berechnet.

Anschließend wird aus der auf das Rad bezogenen Soll-Reibleistung PReibSollRad und der auf die Schiene bezogenen Soll-Reibleistung PReibSollSchiene mittels der Minimalwertbestimmung aus Gleichung (f3) die Soll-Reibleistung PReibSoll ermittelt. Das heißt, es erfolgt eine Auswahl der kleineren Reibleistung der Reibpartner, so dass keine der beiden Temperaturvorgaben überschritten wird.

Unter Berücksichtigung der momentanen Reibkraft Freib (Freib = M*g*mueRs) wird die Reibgeschwindigkeit Vreib und damit der Soll-Radschlupf sSoll zu der ermittelten Soll-Reibleistung PReibSoll und dem Kraftschluss mueRs* gemäß Gleichung (f5) bestimmt. Der vorhandene Kraftschluss mueRs* wird gemäß der Gleichung (f8) unter Berücksichtigung der Ist-Brems- oder Antriebskraft F* und der Ist-Radbeschleunigung oder Radverzögerung aRad* ermittelt.

Ein von der Regeleinrichtung 16 ermittelter Istschlupf S* bzw. Schlupf s des Fahrzeugmodells wird gemäß einer Gleichung (f4) bzw. einer Gleichung (f6) jeweils aus der Fahrzeuggeschwindigkeit VFzg und der Radumfangsgeschwindigkeit VRad ermittelt. Der Schlupf s, s* ist die Differenz zwischen der Radumfangsgeschwindigkeit VRad und der Fahrzeuggeschwindigkeit VFzg des Fahrzeugmodells bezogen auf das Maximum der beiden. Der Betrag des Schlupfs s, s* liegt somit im Bereich zwischen 0 und 1. Die Fahrzeuggeschwindigkeit VFzg wird mittels einem Integrierer 20 aus der Radbeschleunigung aRad ermittelt. Die Radbeschleunigung aRad resultiert aus der Differenz zwischen der eingeprägten Brems- oder Antriebskraft F* und der Reibkraft zwischen Rad und Schiene FReib unter Berücksichtigung der rotatorischen Radmasse m_r. Die Fahrzeugbeschleunigung aFzg resultiert aus der sich einstellenden Reibkraft FReib unter Berücksichtigung der Fahrzeugmasse M (Achslast). Die Fahrzeuggeschwindigkeit VFzg wird mittels einem Integrierer 22 aus der Radbeschleunigung aRad ermittelt.

Der Unterschied zwischen dem Soll-Schlupf sSoll und dem Istschlupf s* ergibt sich mittels einem Vergleicherglied 24. Anschließend kann die zum Angleichen des Istschlupfes s an den Soll-Schlupf sSoll erforderliche Radbeschleunigung oder Radverzögerung aRadSoll berechnet werden. Die erforderliche Radbeschleunigung oder Radverzögerung aRadSoll wird unter Berücksichtigung der Beziehung $k = \dfrac{F\max}{m\_r \cdot s\max}$ , mit proportional Faktor k und dem für die maximale Kraft Fmax gefordertem Schlupf smax sowie der rotatorischen Radmasse m_r gebildet.

In einem weiteren Schritt wird die zum Erreichen der erforderlichen Radbeschleunigung oder Radverzögerung aRadSoll erforderliche Soll-Kraft FSoll anhand der Gleichung (f7) ermittelt. Anschließend kann der Soll-Radschlupf sSoll durch Anpassung der Soll-Brems- oder Antriebskraft FSoll erreicht werden. Der geforderte Radschlupf sSoll wird beispielsweise durch die Anpassung der Bremskraft F* realisiert.

Eine Kraftvorgabe F des Fahrzeugführers für die Brems- oder Antriebskraft wird in einem Minimalauswahlglied 26 auf die zulässige maximale Kraft FSoll begrenzt. Die resultierende einzuprägende Kraft F wird gemäß der Minimalauswahl-Beziehung (f9) ermittelt. In einem Übertragungsglied 28 wird das Zeitverhalten der Brems- bzw. Traktionskraft, beispielsweise der Zeitverzug des Pneumatik-Bremssystems, mittels einem PT1-Glied berücksichtigt.

Offenbart ist ein Verfahren zur Antriebs- und Bremskraftkontrolle eines Fahrzeugs, insbesondere eines Schienenfahrzeugs, mit zumindest zwei Reibpartnern, insbesondere einem Rad 2 und einer Lauffläche 4, dadurch gekennzeichnet, dass aus zumindest einem vorgegebenen oder ermittelten Temperaturwert dTempSoll und einem ermittelten Geschwindigkeitswert ein der Antriebs- oder Bremskraft FSoll entsprechender Wert zur Regelung oder Steuerung der Antriebs- oder Bremskraft ermittelt wird. Weiterhin offenbart sind eine Regeleinrichtung 16 zur Antriebs- und Bremskraftkontrolle sowie ein Fahrzeug mit zumindest einer derartigen Regeleinrichtung.

Bezugszeichenliste

1    Rad-Schiene-System
2    Rad
4    Lauffläche
6    Schiene
8    Außenumfangsfläche
10   Reibleistungsfeld
12   Kurve
14   Kurve
16   Regeleinrichtung
18   Fahrzeugmodellierung
20   Integrierer
22   Integrierer
24   Vergleicherglied
26   Minimalauswahlglied
28   Übertragungsglied

**Patentansprüche**

1. Verfahren zur Antriebs- und Bremskraftkontrolle eines Fahrzeugs, insbesondere eines Schienenfahrzeugs, mit zumindest zwei Reibpartnern, wobei aus mindestens einer vorgegebenen oder ermittelten Temperaturgröße (dTempSoll) und einem ermittelten Geschwindigkeitswert ein der Antriebs- oder Bremskraft (FSoll) entsprechender Wert zur Regelung oder Steuerung der Antriebs- oder Bremskraft ermittelt wird, **dadurch gekennzeichnet, dass** eine Reibleistung (PReibSoll) der Reibpartner (2, 4) derart eingestellt wird, dass eine vorbestimmte Temperaturgröße (dTempSoll) der Reibpartner (2, 4) zur Beeinflussung des Kraftschlusses (mueRs) erreicht wird.

2. Verfahren nach Patentanspruch 1, **dadurch gekennzeichnet, dass** die Temperaturgröße (dTempSoll) eine Temperaturerhöhung (dTempRadSoll) an einem Rad (2) und eine Temperaturerhöhung (dTempSchieneSoll) an einer Lauffläche (4) ist.

3. Verfahren nach Patentanspruch 2, **dadurch gekennzeichnet, dass** die Temperaturerhöhung (dTempRadSoll) am Rad (2) und die Temperaturerhöhung (dTempSchieneSoll) der Lauffläche (4) eine maximal zulässige Temperaturerhöhung ist.

4. Verfahren nach Patentanspruch 2 oder 3, **dadurch gekennzeichnet, dass** die Temperaturerhöhungen (dTempRadSoll, dTempSchieneSoll) phasenweise manuell oder automatisch verändert werden.

5. Verfahren nach einem der vorhergehenden Patentansprüche, **dadurch gekennzeichnet, dass** basierend auf zumindest einer Temperaturgröße (dTempSoll) eine auf zumindest einen Reibpartner bezogene Soll-Reibleistung (PReibSollSchiene) gebildet wird.

6. Verfahren nach dem Patentanspruch 5, **dadurch gekennzeichnet, dass** basierend auf den Temperaturen (dTempRadSoll, dTempSchieneSoll) eine auf das Rad (2) bezogene Soll-Reibleistung (PReibSollRad) und/oder eine auf die Lauffläche (4) bezogene Soll-Reibleistung (PReibSollSchiene) gebildet wird.

7. Verfahren nach einem der vorhergehenden Patentansprüche, **dadurch gekennzeichnet, dass** aus zumindest einer Temperaturgröße und zumindest einem Geschwindigkeitswert eine Reibleistung ermittelt wird.

8. Verfahren nach Patentanspruch 7, **dadurch gekennzeichnet, dass** eine auf den ersten von zwei Reibpartnern bezogene Reibleistung (PReibSollSchiene) aus einer Temperatur dieses Reibpartners und dem Geschwindigkeitswert ermittelt wird.

9. Verfahren nach Patentanspruch 8, **dadurch gekennzeichnet, dass** eine auf die Lauffläche (4) bezogene Reibleistung (PReibSollSchiene) aus einer Temperatur der Lauffläche (4) multipliziert mit dem Geschwindigkeitswert ermittelt wird.

10. Verfahren nach Patentanspruch 9, **dadurch gekennzeichnet, dass** die auf die Lauffläche (4) bezogene Reibleistung (PReibSollSchiene) gemäß der Beziehung gebildet wird:

$$P\,\mathrm{Re}\,ibSollSchiene = dTempSchieneSoll \cdot VFzg \cdot \frac{1}{k\_T} \cdot \frac{Akontakt}{lkontakt}$$

mit:

$$dTempSchieneSoll = \frac{k\_T \cdot \mathrm{Pr}\,eib}{Akontakt} \cdot tkontaktFzg$$

wobei:

■ k_T ein Proportionalitätsfaktor,
■ PReib eine Reibleistung gemäß P*reib=Vreib·Freib* mit der Reibgeschwindigkeit Vreib und der Reibkraft Freib,

■ Akontakt eine Fläche des Rad-Lauffläche-Kontaktgebietes (10),
■ tkontaktFzg eine Kontaktzeit gemäß

$$tkontaktFzg = \frac{lkontakt}{VFzg} \, ,$$

■ lkohtakt die Länge l des Rad-Lauffläche-Kontaktgebietes (10) in Fahrtrichtung und
■ VFzg die Fahrzeuggeschwindigkeit

ist.

11. Verfahren nach einem der vorhergehenden Patentansprüche 7 bis 10, **dadurch gekennzeichnet, dass** eine auf den zweiten von zwei Reibpartnern bezogene Reibleistung aus einer Temperatur dieses Reibpartners und dem Geschwindigkeitswert ermittelt wird.

12. Verfahren nach Patentanspruch 11, **dadurch gekennzeichnet, dass** eine auf das Rad (2) bezogene Soll-Reibleistung (PReibSollRad) aus einer Temperatur des Rads (2) multipliziert mit dem Geschwindigkeitswert ermittelt wird.

13. Verfahren nach Patentanspruch 12, **dadurch gekennzeichnet, dass** die auf das Rad (2) bezogene Reibleistung PReibSollRad gemäß der Beziehung

$$P\,Re\,ibSollRad = dTempRadSoll \cdot VRad \cdot \frac{1}{k\_T} \cdot \frac{Akontakt}{lkontakt}$$

gebildet wird, mit

$$dTempRadSoll = \frac{k\_T \cdot Pr\,eib}{Akontakt} \cdot tkontaktRad \, ,$$

wobei:

■ k_T ein Proportionalitätsfaktor,
■ PReib die Reibleistung gemäß P$reib=Vreib \cdot Freib$ mit der Reibgeschwindigkeit Vreib und der Reibkraft Freib,
■ Akontakt die Fläche des Rad-Lauffläche-Kontaktgebietes (10),
■ tkontaktRad die Kontaktzeit gemäß

$$tkontaktRad = \frac{lkontakt}{VRad} \, ,$$

■ lkontakt die Länge des Rad-Lauffläche-Kontaktgebietes (10) in Fahrtrichtung und
■ VRad die Radumfangsgeschwindigkeit ist.

14. Verfahren nach einem der Patentansprüche 5 bis 13, **dadurch gekennzeichnet, dass** aus dem Minimalwert der auf das Rad (2) bezogenen Soll-Reibleistung (PReibSollRad) und der auf die Lauffläche (4) bezogenen Soll-Reibleistung (PReibSollSchiene) eine Soll-Reibleistung (PReibSoll) ermittelt wird.

15. Verfahren nach Patentanspruch 14, **dadurch gekennzeichnet, dass** basierend auf der momentanen Reibkraft (Freib) die zur Erzeugung der Soll-Reibleistung (PReibSoll) erforderliche Reibgeschwindigkeit (Vreib) und ein damit geforderter Soll-Radschlupf (sSoll) ermittelt werden.

16. Verfahren nach Patentanspruch 15, **dadurch gekennzeichnet, dass** der Soll-Radschlupf (sSoll) basierend auf der Soll-Reibleistung (PReibSoll) und dem Kraftschluss (mueRs) gemäß der Beziehung

$$sSoll = \frac{\Pr eibSoll}{M \cdot g \cdot mueRs \cdot \max(VRad, VFzg)}$$

gebildet wird, wobei:

- ■ M die Achslast des Fahrzeugs,
- ■ g die Erdbeschleunigung,
- ■ VRad die Radumfangsgeschwindigkeit und
- ■ VFzg die Fahrzeuggeschwindigkeit

ist.

17. Verfahren nach Patentanspruch 15 oder 16, **dadurch gekennzeichnet, dass** eine Differenz zwischen dem Soll-Schlupf (sSoll) und einem Istschlupf (s) mittels eines Vergleichs (24) ermittelt wird.

18. Verfahren nach Patentanspruch 17, **dadurch gekennzeichnet, dass** die zum Angleichen des Istschlupfes (s) an den Soll-Schlupf (sSoll) erforderliche Radbeschleunigung oder Radverzögerung (aRadSoll) berechnet wird.

19. Verfahren nach Patentanspruch 18, **dadurch gekennzeichnet, dass** die Radbeschleunigung oder Radverzögerung (aRadSoll) gemäß der Beziehung

$$aRadSoll = (sSoll - sIst) \cdot \frac{F\max}{m\_r \cdot S\max}$$

gebildet wird, wobei:

- ■ sSoll der Soll-Radschlupf,
- ■ sIst der Ist-Radschlupf,
- ■ m_r die rotatorische Radmasse,
- ■ Fmax die maximale Brems- oder Antriebskraft und
- ■ Smax der maximale Radschlupf

ist.

20. Verfahren nach Patentanspruch 18 oder 19, **dadurch gekennzeichnet, dass** die zum Erreichen der erforderlichen Radbeschleunigung oder Radverzögerung (aRadSoll) erforderliche Soll-Kraft (FSoll) ermittelt wird.

21. Verfahren nach einem der Patentansprüche 15 bis 20, **dadurch gekennzeichnet, dass** der Soll-Radschlupf (sSoll) durch Anpassung einer Brems- oder Antriebskraft (FSoll) erreicht wird.

22. Verfahren nach einem der vorhergehenden Patentansprüche 16 bis 21, **dadurch gekennzeichnet, dass** der Kraftschluss (mueRs*) gemäß der Beziehung

$$mueRs* = \frac{F* - aRad* \cdot m\_r}{M \cdot g}$$

gebildet wird, wobei:

- ■ F* eine Brems- oder Antriebskraft,
- ■ aRad* die Radbeschleunigung oder Radverzögerung,
- ■ m_r die rotatorische Radmasse,
- ■ M die Achslast des Fahrzeugs und
- ■ g die Erdbeschleunigung

ist.

23. Verfahren nach einem der vorhergehenden Patentansprüche, **dadurch gekennzeichnet, dass** die Brems- oder Antriebskraft (FSoll) basierend auf der Soll-Radbeschleunigung oder Radverzögerung (aRadSoll) gemäß der Beziehung

$$FSoll = aRadSoll \cdot m\_r + M \cdot g \cdot mueRs*$$

gebildet wird, wobei:

- ■ m_r die rotatorische Radmasse,
- ■ M die Achslast des Fahrzeugs,
- ■ g die Erdbeschleunigung
- ■ mueRs*der berechnete Kraftschluss

ist.

24. Verfahren nach Patentanspruch 23, **dadurch gekennzeichnet, dass** eine Kraftvorgabe (F) des Fahrzeugführers für die Brems- oder Antriebskraft auf die zulässige maximale Kraft (FSoll) begrenzt wird.

25. Regeleinrichtung, insbesondere für eine Gleit- und Schleuderschutzeinrichtung, die eine Regelfunktion aufweist, mit der aus zumindest einer vorgegebenen oder ermittelten Temperaturgröße (dTempSoll) und einem ermittelten Geschwindigkeitswert ein der Antriebs- oder Bremskraft (FSoll) entsprechender Wert zur Regelung oder Steuerung der Antriebs- oder Bremskraft eines Fahrzeugs mit zumindest zwei Reibpartner ermittelt wird, **dadurch gekennzeichnet, dass** die Regeleinrichtung eine Funktion aufweist, mit der eine Reibleistung (PReibSoll) der Reibpartner (2, 4) derart eingestellt wird, dass eine vorbestimmte Temperaturgröße (dTempSoll) der Reibpartner (2, 4) zur Beeinflussung des Kraftschlusses (mueRs) erreicht wird.

26. Regeleinrichtung nach Patentanspruch 25, **dadurch gekennzeichnet, dass** die Regeleinrichtung eine Funktion aufweist, bei der die Temperaturgröße (dTempSoll) eine Temperaturerhöhung (dTempRadSoll) am Rad (2) und eine Temperaturerhöhung (dTempSchieneSoll) der Lauffläche (4) ist.

27. Regeleinrichtung nach Patentanspruch 26, **dadurch gekennzeichnet, dass** als Temperaturerhöhung (dTempRadSoll) am Rad (2) und als Temperaturerhöhung (dTempSchieneSoll) der Lauffläche (4) eine maximal zulässige Temperaturerhöhung verwendet wird.

28. Regeleinrichtung nach Patentanspruch 26 oder 27, **dadurch gekennzeichnet, dass** die Regeleinrichtung eine Funktion aufweist, mit der die Temperaturerhöhungen (dTempRadSoll, dTempSchieneSoll) phasenweise manuell oder automatisch verändert werden können.

29. Regeleinrichtung nach einem der Patentansprüche 25 bis 28, **dadurch gekennzeichnet, dass** die Regeleinrichtung eine Funktion aufweist, mit der, basierend auf zumindest einer Temperaturgröße (dTempSoll) eine auf zumindest einen Reibpartner bezogene Soll-Reibleistung (PReibSollSchiene) ermittelt wird.

30. Regeleinrichtung nach dem Patentanspruch 29, **dadurch gekennzeichnet, dass** die Regeleinrichtung eine Funktion aufweist, mit der basierend auf den Temperaturen (dTempRadSoll, dTempSchieneSoll) eine auf das Rad (2) bezogene Soll-Reibleistung (PReibSollRad) und/oder eine auf die Lauffläche (4) bezogene Soll-Reibleistung (PReibSollSchiene) gebildet wird.

31. Regeleinrichtung nach einem der vorhergehenden Patentansprüche 25 bis 30, **dadurch gekennzeichnet, dass** die Regeleinrichtung eine Funktion aufweist, mit der aus zumindest einer Temperaturgröße und zumindest einen Geschwindigkeitswert eine Reibleistung ermittelt wird.

32. Regeleinrichtung nach Patentanspruch 31, **dadurch gekennzeichnet, dass** die Regeleinrichtung eine Funktion aufweist, mit der eine auf den ersten von zwei Reibpartnern bezogene Reibleistung (PReibSollSchiene) aus einer Temperatur dieses Reibpartners und dem Geschwindigkeitswert ermittelt wird.

33. Fahrzeug mit zumindest einer Regeleinrichtung (16) nach einem der Patentansprüche 25 bis 32.

34. Fahrzeug nach Patentanspruch 33, **dadurch gekennzeichnet, dass** das Fahrzeug ein Schienenfahrzeug mit auf eine Lauffläche (4) aufweisenden Schienen (6) geführten Rädern (2) ist.

**Claims**

1. Method for controlling the driving and braking force of a vehicle, in particular of a rail vehicle, with at least two friction partners, wherein a value corresponding to the driving or braking force (FSoll) is determined for the closed- or open-loop control of the driving or braking force from at least one preset or determined temperature variable (dTempSoll) and a determined speed value, **characterised in that** a friction power (PReibSoll) of the friction partners (2, 4) is adjusted such that a predetermined temperature variable (dTempSoll) of the friction partners (2, 4) for influencing the frictional connection (mueRs) is reached.

2. Method according to patent claim 1, **characterised in that** the temperature variable (dTempSoll) is a temperature increase (dTempRadSoll) at a wheel (2) and a temperature increase (dTempSchieneSoll) at a running surface.

3. Method according to patent claim 2, **characterised in that** the temperature increase (dTempRadSoll) at the wheel (2) and the temperature increase (dTempSchieneSoll) of the running surface is a maximum permissible temperature increase.

4. Method according to patent claim 2 or 3, **characterised in that** the temperature increases (dTempRadSoll, dTemp-SchieneSoll) are altered manually or automatically in phases.

5. Method according to any of the preceding patent claims, **characterised in that** a set friction power (PReibSollSchiene) related to at least one friction partner is formed on the basis of at least one temperature variable (dTempSoll).

6. Method according to patent claim 5, **characterised in that** a set friction power (PReibSollRad) related to the wheel (2) and/or a set friction power (PReibSollSchiene) related to the running surface (4) is/are formed on the basis of the temperatures (dTempRadSoll, dTempSchieneSoll).

7. Method according to any of the preceding patent claims, **characterised in that** a friction power is determined from at least one temperature variable and at least one speed value.

8. Method according to patent claim 7, **characterised in that** a friction power (PReibSollSchiene) related to the first of two friction partners is determined from a temperature of this friction partner and from the speed value.

9. Method according to patent claim 8, **characterised in that** a friction power (PReibSollSchiene) related to the running surface (4) is determined from a temperature of the running surface (4) multiplied by the speed value.

10. Method according to patent claim 9, **characterised in that** the friction power (PReibSollSchiene) related to the running surface (4) is formed in accordance with the relation:

$$PReibSollSchiene = dTempSchieneSoll \cdot VFzg \cdot \frac{1}{k\_T} \cdot \frac{Akontakt}{lkontakt}$$

with:

$$dTempSchieneSoll = \frac{k\_T \cdot Preib}{Akontakt} \cdot tkontaktFzg$$

wherein:

- ■ k_T is a proportionality factor,
- ■ PReib is a friction power according to *Preib = Vreib · Freib,* with the friction speed Vreib and the friction force Freib,
- ■ Akontakt is a surface area of the wheel/running surface contact region (10),

- ■ tkontaktFzg is a contact time according to $tkontaktFzg = \dfrac{lkontakt}{VFzg}$

- ■ lkontact is the length 1 of the wheel/running surface contact region (10) in the direction of travel, and
- ■ VFzg is the vehicle speed.

11. Method according to any of the preceding patent claims 7 to 10, **characterised in that** a friction power related to the second of two friction partners is determined from a temperature of this friction partner and from the speed value.

12. Method according to patent claim 11, **characterised in that** a set friction power (PReibSollRad) related to the wheel (2) is determined from a temperature of the wheel (2) multiplied by the speed value.

13. Method according to patent claim 12, **characterised in that** the set friction power (PReibSollRad) related to the wheel (2) is formed in accordance with the relation:

$$PReibSollRad = dTempRadSoll \cdot VRad \cdot \frac{1}{k\_T} \cdot \frac{Akontakt}{lkontakt}$$

with:

$$dTempRadSoll = \frac{k\_T \cdot Preib}{Akontakt} \cdot tkontaktRad$$

wherein:

- ■ k_T is a proportionality factor,
- ■ PReib is the friction power according to *Preib = Vreib · Freib,* with the friction speed Vreib and the friction force Freib,
- ■ Akontakt is the surface area of the wheel/running surface contact region (10),

- ■ tkontaktRad is a contact time according to $tkontaktRad = \dfrac{lkontakt}{VRad}$

- ■ lkontact is the length 1 of the wheel/running surface contact region (10) in the direction of travel, and

■ VRad is the circumferential speed of the wheel.

14. Method according to any of patent claims 5 to 13, **characterised in that** a set friction power (PReibSoll) is determined from the minimum value of the set friction power (PReibSollRad) related to the wheel (2) and of the set friction power (PReibSollSchiene) related to the running surface (4).

15. Method according to patent claim 14, **characterised in that** the friction speed (Vreib) required for generating the set friction power (PReibSoll) and a set wheel slip (sSoll) required therewith are determined on the basis of the current friction force (Freib).

16. Method according to patent claim 15, **characterised in that** the set wheel slip (sSoll) is formed on the basis of the set friction power (PReibSoll) and the frictional connection (mueRs) in accordance with the relation:

$$sSoll = \frac{PreibSoll}{M \cdot g \cdot mueRs \cdot \max(VRad, VFzg)}$$

wherein:

■ M is the axle load of the vehicle,
■ g is the gravitational acceleration,
■ VRad is the circumferential speed of the wheel, and
■ VFzg is the vehicle speed.

17. Method according to patent claim 15 or 16, **characterised in that** a difference between the set slip (sSoll) and an actual slip (s) is determined by means of a comparison (24).

18. Method according to patent claim 17, **characterised in that** the wheel acceleration or wheel deceleration (aRadSoll) required for equalising the actual slip (s) and the set slip (sSoll) is calculated.

19. Method according to patent claim 18, **characterised in that** the wheel acceleration or wheel deceleration (aRadSoll) is formed in accordance with the relation:

$$aRadSoll = (sSoll - sIst) \cdot \frac{Fmax}{m\_r \cdot Smax}$$

wherein:

■ sSoll is the set wheel slip,
■ sIst is the actual wheel slip
■ m_r is the rotational wheel mass,
■ Fmax is the maximum braking or driving force, and
■ Smax is the maximum wheel slip.

20. Method according to patent claim 18 or 19, **characterised in that** the set force (FSoll) required for reaching the required wheel acceleration or wheel deceleration (aRadSoll) is determined.

21. Method according to any of patent claims 15 to 20, **characterised in that** the set wheel slip (sSoll) is reached by adapting a braking or driving force (FSoll).

22. Method according to any of the preceding patent claims 16 to 21, **characterised in that** the frictional connection (mueRs*) is formed in accordance with the relation:

$$mueRs* = \frac{F*-aRad* \cdot m\_r}{M \cdot g}$$

wherein:

- ■ F* is a braking or driving force,
- ■ aRad* is the wheel acceleration or wheel deceleration,
- ■ m_r is the rotational wheel mass,
- ■ M is the axle load of the vehicle, and
- ■ g is the gravitational acceleration.

23. Method according to any of the preceding patent claims, **characterised in that** the braking or driving force (FSoll) is formed on the basis of the set wheel acceleration or wheel deceleration (aRadSoll) in accordance with the relation:

$$FSoll = aRadSoll \cdot m\_r + M \cdot g \cdot mueRs*$$

wherein:

- ■ m_r is the rotational wheel mass,
- ■ M is the axle load of the vehicle,
- ■ g is the gravitational acceleration, and
- ■ mueRs* is the calculated frictional connection.

24. Method according to patent claim 23, **characterised in that** a preset force value (F) of the driver for the braking or driving force is limited to the permitted maximum force (FSoll).

25. Regulating device, in particular for an antiskid device, having a regulating function by means of which a value corresponding to the driving or braking force (FSoll) for the closed- or open-loop control of the driving or braking force of a vehicle having at least two friction partners is determined from at least one preset or determined temperature variable (dTempSoll) and a determined speed value, **characterised in that** the regulating device comprises a function by means of which a friction power (PReibSoll) of the friction partners (2, 4) is adjusted such that a predetermined temperature variable (dTempSoll) of the friction partners (2, 4) for influencing the frictional connection (mueRs) is reached.

26. Regulating device according to patent claim 25, **characterised in that** the regulating device comprises a function wherein the temperature variable (dTempSoll) is a temperature increase (dTempRadSoll) at the wheel (2) and a temperature increase (dTempSchieneSoll) of the running surface (4).

27. Regulating device according to patent claim 26, **characterised in that** a maximum permissible temperature increase is used as temperature increase (dTempRadSoll) at the wheel (2) and as temperature increase (dTempSchieneSoll) of the running surface (4).

28. Regulating device according to patent claim 26 or 27, **characterised in that** the regulating device comprises a function by means of which the temperature increases (dTempRadSoll, dTempSchieneSoll) are altered manually or automatically in phases.

29. Regulating device according to any of the preceding patent claims 25 to 28, **characterised in that** the regulating device comprises a function by means of which a set friction power (PReibSollSchiene) related to at least one friction partner is determined on the basis of at least one temperature variable (dTempSoll).

30. Regulating device according to patent claim 29, **characterised in that** the regulating device comprises a function by means of which a set friction power (PReibSollRad) related to the wheel (2) and/or a set friction power (PReibSollSchiene) related to the running surface (4) is/are formed on the basis of the temperatures (dTempRadSoll, dTempSchieneSoll).

31. Regulating device according to any of the preceding patent claims 25 to 30, **characterised in that** the regulating device comprises a function by means of which a friction power is determined from at least one temperature variable and at least one speed value.

32. Regulating device according to patent claim 31, **characterised in that** the regulating device comprises a function by means of which a friction power (PReibSollSchiene) related to the first of two friction partners is determined from a temperature of this friction partners and from the speed value.

33. Vehicle having at least one regulating device (16) according to any of patent claims 25 to 32.

34. Vehicle according to claim 33, **characterised in that** the vehicle is a rail vehicle with wheels (2) guided on rails (6) having a running surface (4).

**Revendications**

1. Procédé de contrôle de la force de traction et de la force freinage d'un véhicule, notamment d'un véhicule ferroviaire, par au moins deux partenaires de frottement, dans lequel on détermine, pour la régulation ou la commande de la force de traction ou de la force de freinage, une valeur correspondante à la force (Fsoll) de traction ou à la force (Fsoll) de freinage à partir d'une grandeur (dTempSoll) de température donnée à l'avance ou déterminée et d'une valeur de vitesse déterminée, **caractérisé en ce que** l'on règle une puissance (Preibsoll) de frottement des partenaires (2, 4) de frottement de manière à obtenir une grandeur (dTempSoll) de température déterminée à l'avance des partenaires (2, 4) de frottement pour influencer l'adhérence (mueRs).

2. Procédé suivant la revendication 1, **caractérisé en ce que** la grandeur (dTempSoll) de température est une élévation (dTempRadSoll) de température sur une roue (2) et une élévation (dTempSchieneSoll) de température sur une surface (4) de roulement.

3. Procédé suivant la revendication 2, **caractérisé en ce que** l'élévation (dTempRadSoll) de température sur la roue (2) et l'élévation (dTempSchieneSoll) de température sur une surface (4) de roulement est une élévation de température admissible au maximum.

4. Procédé suivant la revendication 2 ou 3, **caractérisé en ce que** les élévations (dTempRadSoll, dTempSchieneSoll) de température sont modifiées phase par phase manuellement ou automatiquement.

5. Procédé suivant l'une des revendications précédentes, **caractérisé en ce que** l'on forme, sur la base d'au moins une grandeur (dTempSoll) de température, une puissance (PReibSollSchiene) de frottement de consigne rapportée à au moins un partenaire de frottement.

6. Procédé suivant la revendication 5, **caractérisé en ce que** l'on forme, sur la base des températures (dTempRadSoll, dTempSchieneSoll), une puissance (PReibSollRad) de frottement de consigne rapportée à la roue (2) et/ou une puissance (PReibSollSchiene) de frottement de consigne rapportée à la surface (4) de roulement.

7. Procédé suivant l'une des revendications précédentes, **caractérisé en ce que** l'on détermine une puissance de frottement à partir d'au moins une grandeur de température et d'au moins une valeur de vitesse.

8. Procédé suivant la revendication 7, **caractérisé en ce que** l'on détermine une puissance (PReibSollSchiene) de frottement rapportée au premier de deux partenaires de frottement à partir d'une température de ce partenaire de frottement et de la valeur de vitesse.

9. Procédé suivant la revendication 8, **caractérisé en ce que** l'on détermine une puissance (PReibSollSchiene) de frottement rapportée à la surface (4) de roulement à partir d'une température de la surface (4) de roulement multipliée par la valeur de vitesse.

10. Procédé suivant la revendication 9, **caractérisé en ce que** l'on forme la puissance (PReibSollSchiene) de frottement rapportée à la surface (4) de roulement suivant la relation :

$$P\,Re\,ibSollSchiene = dTempSchieneSoll \cdot VFzg \cdot \frac{1}{k\_T} \cdot \frac{Akontakt}{lkontakt}$$

avec

$$dTempSchieneSoll = \frac{k\_T \cdot Preib}{Akontakt} \cdot tkontaktFzg$$

avec :

- k_T est un facteur de proportionnalité,
- Preib est une puissance de frottement suivant Preib = Vreib.Freib avec la vitesse Vreib de frottement et la force Freib de frottement,
- Akontakt est une surface de la zone (10) de contact de la surface de roulement de la roue,
- tkontktFzg est un temps de contact suivant

$$tkontaktFzg = \frac{lkontakt}{VFzg},$$

- lcontact est la longueur l de la zone (10) de contact de la surface de roulement de la roue dans la direction de marche et
- VFzg est la vitesse du véhicule.

11. Procédé suivant l'une des revendications précédentes 7 à 10, **caractérisé en ce que** l'on détermine une puissance de frottement rapportée au seconde deux partenaires de frottement à partir d'une température de ce partenaire de frottement et de la valeur de la vitesse. ,

12. Procédé suivant la revendication 11, **caractérisé en ce que** l'on détermine une puissance (PReibSollRad) de frottement de consigne rapportée à la roue (2) à partir d'une température de la roue (2) multipliée par la valeur de la vitesse.

13. Procédé suivant la revendication 12, **caractérisé en ce que** l'on forme la puissance (PReibSollRad) de frottement rapportée à la roue (2) suivant la relation

$$P\,Re\,ibSollRad = dTempRadSoll \cdot VRad \cdot \frac{1}{k\_T} \cdot \frac{Akontakt}{lkontakt}$$

avec :

$$dTempRadSoll = \frac{k\_T \cdot Preib}{Akontakt} \cdot tkontaktRad,$$

avec :

■ k_T est un facteur de proportionnalité,

■ Preib est une puissance de frottement suivant Preib = Vreib.Freib avec la vitesse Vreib de frottement et la force Freib de frottement,

■ Akontakt est une surface de la zone (10) de contact de la surface de roulement de la roue,

■ tkontktFzg est un temps de contact suivant

$$tkontaktRad = \frac{lkontakt}{VRad},$$

■ lcontact est la longueur l de la zone (10) de contact de la surface de roulement de la roue dans la direction de marche et

■ Vrad est la vitesse périphérique de la roue.

14. Procédé suivant l'une des revendications 5 à 13, **caractérisé en ce que** l'on détermine une puissance (PReibSoll) de frottement de consigne à partir de la valeur minimum de la puissance (PReibSollRad) de frottement de consigne rapportée à la roue (2) et de la puissance (PReibSollSchiene) de frottement de consigne rapportée à la surface (4) de roulement.

15. Procédé suivant la revendication 14, **caractérisé en ce que** sur la base de la force (Freib) de frottement instantanée, on détermine la vitesse (Vreib) de frottement nécessaire à la production de la puissance (PReibSoll) de frottement de consigne et un glissement (sSoll) de roue de consigne ainsi exigé.

16. Procédé suivant la revendication 15, **caractérisé en ce que** l'on forme le glissement (sSoll) de roue de consigne sur la base de la puissance (PReibSoll) de frottement de consigne et de l'adhérence (mueRs) selon la relation

$$sSoll = \frac{PreibSoll}{M \cdot g \cdot mueRs \cdot \max(VRad,VFzg)}$$

avec :

■ M est la charge d'essieu du véhicule,

■ g est l'accélération de la pesanteur,

■ Vrad est la vitesse périphérique de la roue et

■ VFzg est la vitesse du véhicule

17. Procédé suivant la revendication 15 ou 16, **caractérisé en ce qu'**on détermine une différence entre le glissement (sSoll) de consigne et un glissement (s) réel au moyen d'une comparaison (24).

18. Procédé suivant la revendication 17, **caractérisé en ce que** l'on calcule l'accélération de la roue ou la décélération (aRadSoll) de la roue nécessaire pour égaliser le glissement (s) réel au glissement (sSoll) de consigne.

19. Procédé suivant la revendication 18, **caractérisé en ce que** l'on forme l'accélération de la roue ou la décélération (aRadSoll) de la roue selon la relation

$$aRadSoll = (sSoll - sIst) \cdot \frac{Fmax}{m\_r \cdot Smax}$$

avec :

■ sSoll est le glissement de roue de consigne,
■ sIst est le glissement de roue réelle,
■ m_r est la masse rotorique de la roue,
■ Fmax est la force maximum de freinage ou de traction et
■ Smax est le glissement maximum de la roue.

20. Procédé suivant la revendication 18 ou 19, **caractérisé en ce que** l'on détermine la force (Fsoll) de consigne nécessaire à l'obtention de l'accélération de la roue ou de la décélération (aRadSoll) de la roue qui est nécessaire.

21. Procédé suivant l'une des revendications 15 à 20, **caractérisé en ce que** l'on obtient le glissement (sSoll) de la roue de consigne en adaptant une force (Fsoll) de freinage ou de traction.

22. Procédé suivant l'une des revendications précédentes 16 à 21, **caractérisé en ce que** l'on forme l'adhérence (mueRS*) suivant la relation

$$mueRs^* = \frac{F^* - aRad^* \cdot m\_r}{M \cdot g}$$

avec :

■ F* est une force de freinage ou une force de traction,
■ aRad* est l'accélération de la roue ou la décélération la roue,
■ m_r est la masse rotorique de la roue,
■ M est la charge d'essieu du véhicule et
■ g est l'accélération de la pesanteur.

23. Procédé suivant l'une des revendications précédentes, **caractérisé en ce que** l'on forme la force (Fsoll) de freinage ou la force de traction sur la base de l'accélération de consigne de la roue ou de la décélération (aRadSoll) de consigne de la roue selon la relation

$$FSoll = aRadSoll \cdot m\_r + M \cdot g \cdot mueRs^*$$

avec :

■ m_r est la masse rotorique de la roue,
■ M est la charge d'essieu du véhicule,
■ g est l'accélération de la pesanteur.
■ mueRs* est l'adhérence calculée.

24. Procédé suivant la revendication 23, **caractérisé en ce qu'**une prescription (F) de force du conducteur du véhicule pour la force de freinage ou pour la force de traction est limitée à la force (Fsoll) maximum admissible.

25. Dispositif de régulation, notamment pour un dispositif anti-enrayeur et d'anti-patinage, qui a une fonction de régulation par laquelle une valeur correspondante à la force (Fsoll) de traction ou la force de freinage est déterminée pour la régulation de la commande de la force de traction ou de la force de freinage d'un véhicule ayant au moins deux partenaires de frottement à partir d'au moins (dTempSoll) de température donnée à l'avance ou déterminée et d'une valeur déterminée de vitesse, **caractérisé en ce que** le dispositif de régulation a une fonction par laquelle une puissance (PreibSoll) de frottement des partenaires (2, 4) de frottement est réglée de manière à obtenir une grandeur (dTempSoll) de température déterminée à l'avance des partenaires (2, 4) de frottement pour influencer l'adhérence (mueRs).

**26.** Dispositif de régulation suivant la revendication 25, **caractérisé en ce que** le dispositif de régulation a une fonction pour laquelle la grandeur (dTempSoll) de température est une élévation (dTempRadSoll) de température sur la roue (2) et une élévation (dTempSchieneSoll) de température de la surface (4) de roulement.

**27.** Dispositif de régulation suivant la revendication 26, **caractérisé en ce que**, comme élévation (dTempRadSoll) de température sur la roue (2) et comme élévation dTempSchieneSoll) de température de la surface (4) de roulement, une élévation de température admissible au maximum est utilisée.

**28.** Dispositif de régulation suivant la revendication 26 ou 27, **caractérisé en ce que** le dispositif de régulation a une fonction par laquelle les élévations (dTempRadSoll, dTempSchieneSoll) de température peuvent être modifiées phase par phase manuellement ou automatiquement.

**29.** Dispositif de régulation suivant l'une des revendications 25 à 28, **caractérisé en ce que** le dispositif de régulation a une fonction par laquelle, sur la base d'au moins une grandeur (dTempSoll) de température une puissance (PReibSollSchiene) de frottement de consigne rapportée à au moins un partenaire de frottement est déterminée.

**30.** Dispositif de régulation suivant la revendication 29, **caractérisé en ce que** le dispositif de régulation a une fonction par laquelle, sur la base des températures (dTempRadSoll, dTempSchieneSoll) une puissance (PreibSollRad) de frottement de consigne rapportée à la roue (2) et/ou une puissance (PReibSollSchiene) de frottement de consigne rapportée à la surface (4) de roulement est formée.

**31.** Dispositif de régulation suivant l'une des revendications précédentes 25 à 30, **caractérisé en ce que** le dispositif de régulation a une fonction par laquelle une puissance de frottement est déterminée à partir d'au moins une grandeur de température et d'au moins une valeur de vitesse.

**32.** Dispositif de régulation suivant la revendication 31, **caractérisé en ce que** le dispositif de régulation a une fonction par laquelle une puissance (PReibSollSchiene) de frottement rapportée au premier de deux partenaires de frottement est déterminée à partir d'une température de ce partenaire de frottement et de la valeur de vitesse.

**33.** Véhicule ayant au moins un dispositif (16) de régulation suivant l'une des revendications 25 à 32.

**34.** Véhicule suivant la revendication 33, **caractérisé en ce que** le véhicule est un véhicule ferroviaire ayant des roues (2) guidées sur des rails (6) ayant une surface (4) de roulement.

<u>Fig. 1</u>

Fig. 2

Fig. 3

EP 2 231 448 B1

FIG. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19961805 A1
- EP 0818372 A2
- FR 2866853 A
- WO 9200212 A1
- US 20070194623 A1